Europäisches Patentamt

European Patent Office

Office européen des brevets

(19)

(11) EP 0 715 641 B1

(12) **EUROPÄISCHE PATENTSCHRIFT**

(45) Veröffentlichungstag und Bekanntmachung des Hinweises auf die Patenterteilung:
**06.05.1998 Patentblatt 1998/19**

(21) Anmeldenummer: **94921584.2**

(22) Anmeldetag: **22.07.1994**

(51) Int Cl.6: **C08J 5/22**

(86) Internationale Anmeldenummer:
**PCT/DE94/00849**

(87) Internationale Veröffentlichungsnummer:
**WO 95/06083 (02.03.1995 Gazette 1995/10)**

(54) **STARK BASISCHE ANIONENAUSTAUSCHERMEMBRANEN UND VERFAHREN ZU DEREN HERSTELLUNG**

STRONGLY ALKALINE ANION EXCHANGE MEMBRANES AND PROCESS FOR PRODUCING THE SAME

MEMBRANES ECHANGEUSES D'ANIONS EXTREMEMENT BASIQUES ET LEUR PROCEDE DE PRODUCTION

(84) Benannte Vertragsstaaten:
**AT BE CH DE FR GB IT LI NL SE**

(30) Priorität: **23.08.1993 DE 4328226**

(43) Veröffentlichungstag der Anmeldung:
**12.06.1996 Patentblatt 1996/24**

(73) Patentinhaber: **Altmeier, Patrick**
**66822 Lebach (DE)**

(72) Erfinder: **Altmeier, Patrick**
**66822 Lebach (DE)**

(56) Entgegenhaltungen:
**DE-A- 2 050 785          DE-A- 3 143 804**
**DE-B- 1 045 648          FR-A- 1 562 003**
**US-I- B 433 930**

**Beschreibung**

Technisches Gebiet

Die Erfindung betrifft eine neue Ionenaustauschermembran und ein Verfahren zu ihrer Herstellung.

Ionenaustauschermembranen sind von Bedeutung als unentbehrliche Diaphragmen für die Elektrodialyse und die Elektrolyse. Sie werden dabei in Form von Kationen- und Anionenaustauschermembranen alternierend zwischen einem Elektrodenpaar zur Unterteilung der Elektrolytlösung in verschiedene Prozeßströme verwendet.

Beide Formen der Ionenaustauschermembranen ermöglichen dabei den Übergang von jeweils einer entsprechenden Ionensorte, also entweder Kationen oder Anionen. In der Summe ermöglicht folglich ein Membranenpaar den Übergang von Salz.

Stand der Technik

Anionenaustauschermembranen werden heute meist auf Basis von Styrol-Copolymeren hergestellt. Meist wird Styrol und Divinylbenzol / Ethylvinylbenzol zusammen mit Inertpolymeren (Paste-Methode) polymerisiert und anschließend durch Chlormethylierung und darauffolgende Aminierung funktionalisiert.

Neben Styrol als Matrixpolymer können auch Polysulfone, Polyethersulfone oder auch Poly-(vinylpyridin)-derivate verwendet werden.

Bei dieser Methode sind Filmbildung und Funktionalisierung des Films in zwei Schritten getrennt. Dies erschwert eine Entwicklung von Membranen mit speziellen Eigenschaften erheblich. Es müssen z.B. oft Weichmacher als Füllmaterialien für den noch nicht funktionalisierten Film eingesetzt werden.

Neben dieser Paste-Methode (Mizutani et al.; Bull. Chem. Soc. Japan, 38(5) S. 689-94) besteht die Möglichkeit, Polymere, die aktives Halogen enthalten, in einem Verfahrensschritt zu einem Film zu formen (Membranbildungsschritt), gleichzeitig zu funktionalisieren und eine Vernetzung zu erreichen, die dem Vernetzungsgrad des Produktes entspricht (Desalination, 79 (1990) 125-144). Eine derartige Membran muß vor Gebrauch im Verwendungsmedium gequollen werden. Bei diesem Verfahren wird jedoch ein chlormethyliertes Polystyrol benötigt, das technisch nicht in großen Mengen verfügbar ist, und dessen Herstellung die Verwendung von toxischem (Chlormethyl)-methylether notwendig macht. Aus der Verwendung der aromatischen Matrixpolymere folgt auch, daß die daraus hergestellten Membranen leicht verschmutzen, da die aromatische Matrix zur Aufnahme von Schmutz neigt. Dies stellt eines der größten ungelösten Probleme der Elektrodialyse dar.

Membranen wurden auch durch Vernetzung von Polyethylenimin mit Epichlorhydrinoligomeren hergestellt (An. Quim., Ser. B 1982, 78(2), 221-3; CA 98:75956y). Die entstehenden Membranen haben den großen Nachteil, daß sie weitgehend schwach basisch sind (Vgl. Advances in polymer science 70 S. 92) und daher in neutraler Lösung nicht verwendbar sind. Sie besitzen eine statistische Verteilung sekundärer, tertiärer und quaternärer Stickstoffatome. Die reproduzierbare Herstellung derartiger Membranen ist daher schwierig, der Quellungsgrad der Membranen pH-abhängig.

Darstellung der Erfindung

Gegenstand dieser Erfindung ist eine stark basische Anionenaustauschermembran, die

1. billig und einfach herstellbar ist, d. h. in einem Membranbildungsschritt eine Membran liefert, ohne nachgeschaltete Derivatisierungsreaktionen

2. gegen Verschmutzung resistent ist und

3. deren Eigenschaften sich besonderen Anforderungsprofilen anpassen lassen (z.B. Acidblocker, für große Anionen permeable Membranen, alkalistabile Anionenaustauschermembranen).

Es wurde gefunden, daß die bei der Umsetzung von Poly-(epichlorhydrin), Poly-(epichlorhydrin-co-ethylenoxid) oder ähnlichen Polymeren mit tertiären Aminen, vorzugsweise 1,4-Diazabicyclo-(2,2,2)-octan, in dipolar aprotischen Lösemitteln entstehenden hoch aminierten Produkte mit geeigneten Inertpolymeren zu mechanisch selbsttragenden Membranen verarbeitet werden können, welche die oben genannten Bedingungen erfüllen. Diese Membranen können insbesondere als Acidblocker-Membranen für die Elektrodialyse von Säuren mit hohen Stromausbeuten oder als Membranen zum Transport besonders großer Anionen ausgeführt werden.

Kurze Beschreibung der Zeichnungen

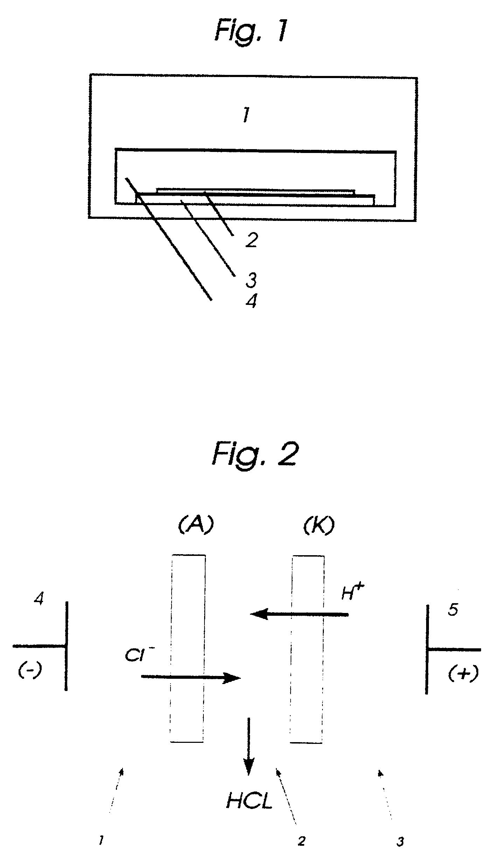

In Fig. 1 ist schematisch ein Querschnitt durch den Versuchsaufbau zum Herstellen der Anionenaustauschermembranen dargestellt. In einem temperierten Raum 1 (Trockenschrank) wird das abgeschlossene Reaktionsgefäß 4 installiert. Seine Größe wird der Größe der Membranfläche 2 angepaßt, die sich auf einer planen Fläche 3 (z.B. Glasplatte) darin befindet.

In Fig. 2 ist schematisch eine Anordnung zum elektroosmotischen Pumpen (EOP) von Säuren dargestellt. Es ist der minimale Aufbau realisiert mit einer sich wiederholenden Einheit, wobei die Diluatkammer mit der Kathodenkammer identisch wird. Zwischen Anode 5 und Kathode 4 befindet sich eine Kationenaustauschermembran (K) und eine Anionenaustauschermembran (A), so daß drei Kammern 1, 2 und 3 entstehen. Durch Kammer 1 wird die aufzukonzentrierende Säure und durch Kammer 3 eine beliebige starke Säure, z.B. Schwefelsäure gepumpt. In Kammer 2 befindet sich das aufkonzentrierte Produkt.

Wege zur Ausführung der Erfindung

Die Membranen werden hergestellt, indem eine Gießlösung in an sich bekannter Art und Weise auf einer Unterlage, z.B. Glasplatte, Stahlblech, Walze, Verstärkerflies, Gewebe o.ä. zu einem z.B. 0,2 - 2 mm dicken Film ausgestrichen wird und in einem Trockenschrank, durch Bestrahlung mit einer Infrarotlampe, durch Heizen der Walztrommel o.ä. erwärmt wird. Dadurch verdunstet das Lösemittel und gleichzeitig reagiert das Amin mit dem reaktiven Halogen des Polymers. Hierdurch entsteht in einem Schritt die feste fertige Membran aus der Gießlösung.

Dieser Membranbildungsschritt kann so gesteuert werden, daß eine gewisse Restmenge Lösemittel im Membrankörper verbleibt oder daß das gesamte Lösemittel verdampft.

Es entsteht so ein auf der Unterlage fest haftender, oft spröder, harter Film. Bringt man diesen in geeignete Medien. z.B. verdünnte wäßrige Salzlösungen, so quillt die Membran im entsprechenden Lösemittel. Dadurch wird sie weich und biegsam und verliert die Haftung zur Unterlage. Sie löst sich davon als gebrauchsfertige Membran.

Die Membran kann auch dergestalt ausgeführt werden, daß ein Verstärkergewebe von der Gießlösung bestrichen oder umhüllt wird oder ein Gewebe auf den flüssigen Film aufgelegt wird. So entstehen durch Gewebe verstärkte Membrantypen.

Die erfindungsgemäßen Membranen zeichnen sich dadurch aus, daß die Lösung, aus dem die Membran geformt wird, drei funktionelle Komponenten enthält. Die Wahl und die Abstimmung dieser drei Komponenten - aktives Polymer, Aminkomponente und Inertpolymer - bestimmen das Wesen der Membranen. Diese Abstimmung muß im Lösemittel der Gießlösung getroffen werden und muß auch in der fertigen Membran Bestand haben. Als Lösemittel sind dipolar aprotische Lösemittel wie z.B. Dimethylformamid (DMF), Dimethylacetamid oder Cyclohexanon geeignet. Es ist durchaus von Vorteil, mit Lösemittelgemischen zu arbeiten, da die Löslichkeit und Verträglichkeit der Polymere darin generell etwas besser ist.

Das Wesen der erfindungsgemäßen Membranen wird durch den Typ des verwendeten reaktiven halogenhaltigen Polyethers bestimmt.

Das hier verwendete reaktive Polymer, dessen polymere Hauptkette durch Ethylenoxidgruppierungen charakterisiert wird, wobei als charakteristische Komponente Strukturen der Form

$$-[CR_1R_2 - CR_3R_4 - O]_n-$$

enthalten sind und wobei mindestens einer der Reste $R_1$-$R_4$ eine $CH_2Z$ Gruppe mit $Z$ = Halogen ist, weist verschiedene Unterschiede gegenüber üblicherweise verwendeten reaktiven Polymeren auf, die hier durch die Kombination mit entsprechenden Aminen und gegebenenfalls Inertpolymer und einer guten Wahl der Reaktionsbedingungen eine breite Palette neuer Membranen ergeben, die zunächst unerwartete Eigenschaften aufweisen.

Die erfindungsgemäße Reaktivkomponente erfüllt zunächst verschiedene grundsätzliche Vorbedingungen: Sie ist technisch gut verfügbar und die Herstellung benötigt keine Chlormethylierung als Verfahrensschritt, sie ist billig, sie ist rein aliphatisch aufgebaut, somit neigen daraus hergestellte Membranen nicht zu Verschmutzungen, und sie ist mit Inertpolymeren verarbeitbar, die bei anderen Grundpolymeren nicht verwendet werden können.

Weiterhin besitzen die erfindungsgemäß verwendeten halogenierten Polymere eine wesentlich geringere Molmasse der monomeren Einheit gegenüber chlormethylierten Polystyrolen oder Polysulfonen. Die erreichbaren Festionenkonzentrationen im Membranmaterial liegen also weitaus höher, da pro Gramm Polymer mehr reaktive Gruppen vorhanden sind. Siehe dazu auch Tabelle 1.

Tabelle 1

| Verbindung | Formelmasse |
|---|---|
| 100% chlormethyliertes Polystyrol | 151,5 g/mol aktives Cl |

Tabelle 1   (fortgesetzt)

| Verbindung | Formelmasse |
| --- | --- |
| 20% chlormethyliertes Polystyrol | 575,5 g/mol aktives Cl |
| Polyepichlorhydrin | 91,5 g/mol aktives Cl |
| Poly(epichlorhydrin-co-ethylenoxid) | 135,5 g/mol aktives Cl. |

Um Anionenaustauschermembranen mit geringen Protonenleckagen herzustellen, muß es gelingen, eine homogene Membranmatrix mit einer hohen Festionenkonzentration und einem gelingen Wassergehalt herzustellen. Diese Bedingungen sind essentiell, um einen wirksamen Donnan-Ausschluß auch für die sehr mobilen Protonen zu gewährleisten.

Um im Gegensatz dazu großen Anionen den Durchtritt durch die Membran zu erlauben. müssen in der Membran große Kanäle auf molekularer Basis vorhanden sein.

Es hat sich überraschend gezeigt, daß die Verwendung der erfindungsgemäßen Kombination von aktiven Komponenten in Verbindung mit den weiteren Komponenten beide Extremanforderungen an Anionenaustauschermembranen abdecken kann.

Neben diesen günstigen Aspekten ist der wichtigste weitere Unterschied des hier verwendeten reaktiven Polymers zu anderen reaktiven Polymeren seine geringere Reaktivität mit tertiären Aminen.

Während Benzylhalogenidgruppierungen enthaltende Polymere mit den meisten tertiären Aminen teilweise schon bei Raumtemperatur rasch reagieren, ist die Reaktivität tertiärer Amine mit den erfindungsgemäß verwendeten halogenierten Polyethern sehr unterschiedlich. So reagieren verschiedene Amine in DMF gar nicht, z.B. $NEt_3$ oder $PPh_3$ (Okawara, M. et al: Chemical modification of Polyvinylchloride and related polymers; ACS Symp. Ser. 121 S. 56), andere nur teilweise, z.B. Dimethylethanolamin 66 mol% (Schlatzer, Robert et al; Ger. Offen. 2,540,310; CA 85: 34031f) und Carbazol unter Phasentransferbedingungen bis zu 66 mol% (Thanh Dung N'Huyen et al; Polymer 19, 424) und andere praktisch vollständig, z.B. Trimethylamin unter Druck im Autoklav (Ando, Shin; Japan. Kokai 76 69,434; CA 85:150995x) oder 1,4-Diazabicyclo-(2,2,2)-octan (Siehe Beispiel 10).

Tertiäre Amine reagieren mit organischen Halogenverbindungen zu einem chemisch einheitlichen quaternären Ammoniumsalz. Diamine vermögen mit beiden Aminogruppen an verschiedenen Molekülen zu reagieren, so daß bei Verwendung einer polymeren Halogenverbindung eine Vernetzung des Polymers gleichzeitig mit der Bildung der quaternären Ammoniumionen möglich ist. Es ist daher ohne Beschränkung der Erfindung von Vorteil, tertiäre Diamine zur Quaternisierung und gleichzeitigen Vernetzung der erfindungsgemäß verwendeteten Polymere zu verwenden.

Die physikalischen Eigenschaften der Amine müssen ebenso dem Verfahren angepaßt werden. Um eine Membran leicht herstellen zu können, muß es möglich sein, daß Amin und halogeniert er Polyether gemeinsam in der Gießlösung eingebunden sind. Trimethylamin ist bei Normalbedingungen ein Gas, so daß es bei einem derartigen Verfahren nicht verwendet werden kann.

Die Erfindung betrifft Membranen, bei denen die genannten chemischen und physikalischen Randbedingungen erfüllt werden und das Problem der geringeren Reaktivität der aktiven Komponente durch die Kombination mit geeigneten Aminen und der richtigen Wahl der Reaktionsbedingungen einfach gelöst ist.

Bei den erfindungsgemäß verwendeten Polymeren muß für die Quaternisierung der Amine eine gewisse Reaktionszeit mit einkalkuliert werden, in der Sorge getragen wird, daß das Amin nicht mit dem verwendeten Lösemittel verdampft. Dies wird in einfacher Art erreicht, indem man das Dampfvolumen über dem Film während der Reaktionszeit begrenzt. In einer beispielhaften Ausführung wird dabei die Gießlösung auf einer ca 100 $cm^2$ großen Fläche zu einem Film von z.B. 300 um Dicke auf einer 10 x 20 cm großen Glasplatte ausgestrichen, und diese in einem Blechgefäß der Ausmaße 22 x 21 x 4 cm im Trockenschrank bei z.B. 125° C durchreagiert. In Fig. 1 ist eine derartige Apparatur schematisch dargestellt.

Die erfindungsgemäße Verwendung von 1,4-Diazabicyclo-(2.2.2)-octan als Aminkomponente erweist sich als besonders vorteilhaft, da die chemischen und physikalischen Randbedingungen ideal erfüllt sind und die Verbindung für die Quaternisierung des ersten Stickstoffatoms stark aktiviert ist. Andererseits erweist sich auch die oben genannte Maßnahme während der Reaktion und des Abdampfens des Lösemittels besonders bei Verwendung dieses Amins als wesentlich für das Gelingen guter Membranen, da dieses Amin besonders stark zum Verdampfen mit dem Lösemittel, vorzugsweise DMF, neigt.

Ebenso wurde gefunden, daß es von Vorteil ist, die Gießlösung bei erhöhter Temperatur, meist 80-120° C, vorreagieren zu lassen. Man erreicht somit eine ca. 10 bis 20%ige Vorsubstitution, ohne daß es in der Lösung zu einer Vernetzung des Polymers kommt. Man kann jedoch diese Substitution im voraus fast vollständig durchführen, indem im tertiären Di- oder Polyamin jede über eins gehende Aminogruppe geschützt wird. Man erreicht so, daß die einzelne übriggebliebene tertiäre Aminogruppe mit dem Polymer ohne Vernetzung reagieren kann. Erst nach Entfernen der Schutzgruppe an dem nunmehr polymer gebundenen Ammoniumsalz ist das Polymer vernetzbar. Als Schutzgruppierung eignet sich insbesondere eine einfache Salzbildung. Es wird dann das polymere Ammoniumsalz anstelle von Reaktivpolymer in die Gießlösung eingearbeitet.

Durch Einarbeiten eines Inertpolymers läßt sich das Eigenschaftsprofil derartiger Membranen noch weiter variieren. Es besteht bei erfindungsgemäßer Verwendung von Poly-(epichlorhydrin) oder Derivaten die zusätzliche Möglichkeit, Inertpolymere in die Membran einzubinden, die vorher nicht einbindbar waren: Im Verlaufe der Quaternisierung verändert sich der Charakter des aktiven Polymers. Das entstehende Polyetheramin ist mit verschiedenen Polymeren besser verträglich als die Polyetherhalogenverbindung. Daher lassen sich mit diesem andere Polymermischungen herstellen als mit dem ursprünglichen halogenierten Polyether. Es kann so z.B. sein, daß die Gießlösung zunächst ein Zweiphasensystem ausbildet, das sich durch Erwärmen und Rühren erst nach einiger Zeit mischt.

Dadurch entsteht eine weitere Variationsmöglichkeit der Membranen, da die mechanischen Eigenschaften der Membran durch die Inertkomponente wesentlich bestimmt werden. So entstehen mit polymeren Nitrilen sehr zug- und reißfeste Membranen, während bei Verwendung von Polysulfonen elastische und biegefeste Membranen erhalten werden können. Je nach Zusammensetzung der Membran ist es sogar möglich, diese Membranen zu falten, ohne daß Zerstörung eintitt. Daher können erfindungsgemäße Membranen oft ohne Verstärkergewebe zum Einsatz kommen.

Polyepichlorhydrin bzw. dessen Reaktionsprodukte sind mit Udel(R) Polysulfon relativ schlecht verträglich. Es bilden sich oft Zweiphasensysteme aus. Die erfindungsgemäßen Membranen können jedoch als ein makroskopisch homogener Polymerfilm mit bis zu 30% oder mit mehr als 70% Polyepichlorhydringehalt hergestellt werden. Membranen dieses Typs sind im alkalischen Milieu stabil.

Mit Polyacrylnitril (PAN) lässt sich mit diesem Verfahren Polyepichlorhydrin in jedem Verhältnis verarbeiten. Während PAN mit Polyepichlorhydrin nicht mischbar ist, werden die Polymere während der membranbildenden Reaktion kompatibel. Überraschend erhält man erfindungsgemäß Membranen, die in 4 N HCl stabil sind und sehr hohe Transportzahlen für Chlorid aufweisen. Dies ist insbesondere daher besonders überraschend, da PAN allgemein durch Säure hydrolysiert wird. Dadurch käme es zur Zerstörung der Membran. Da die erfindungsgemäßen Membranen jedoch in Säure eine sehr geringe Protonenleckage besitzen, können die Protonen den erfindungsgemäßen Membrankörper auch nicht schädlich beeinflussen.

Der Zusatz weiterer primärer, sekundärer oder tertiärer Amine kann von großem Vorteil sein, um die Festionenkonzentration zu erhöhen oder eine gewisse Erhöhung der Vernetzung zu bewirken.

Als weitere Inertpolymere kommen weitere in DMF, N-Methylpyrrolidon oder Cyclohexanon lösliche Polymere wie z.B. Polymethacrylnitril, Polyvinylidenfluorid, Polyethersulfon, Polystyrol oder Polyvinylbutylether in Frage.

Bester Weg zur Ausführung der Erfindung

Unter Beachtung der bisherigen Ausführungen und ohne hiermit Beschränkungen vorzunehmen, verfährt man am besten so, daß man zu einer Lösung des aktiven Polymers die Aminkomponente, vorzugsweise 1,4-Diazabicyclo-(2,2,2)-octan in Substanz oder Lösung, in einem Massenverhältnis Reaktivpolymer - Amin von vorzugsweise 1 : 1 - 2.5 gibt, dann eine Lösung des Inertpolymers hinzugibt und die Lösung anschließend auf 50 - 100° C erwärrmt, bis sich die Viskosität der Lösung merklich zu erhöhen beginnt. Die optimalen Temperaturen und Zeiten für diesen Schritt hängen von der jeweiligen Zusammensetzung und Konzentration ab und müssen jedesmal experimentell bestimmt werden. Typische Werte sind jedoch 70 - 90° C und 2 - 12 h. Ebenso ist das beste Verhältnis Reaktivpolymer - Amin jeweils experimentell abzustimmen. Typische Konzentrationen für die verwendeten Polymerlösungen liegen bei 10 - 15 %. Anschließend können weitere Aminkomponenten oder weiteres aktives Polymer zugegeben werden.

Die so erhaltenen Gießlösungen werden anschließend, wie in Beispiel 1 beschrieben, in einer Apparatur gemäß Fig. 1 zu Membranen verarbeitet. Auch hier müssen Temperatur und Dauer der thermischen Behandlung des Films experimentell abgestimmt werden. Man findet oft, daß Membranen, die zu lange oder zu heiß behandelt wurden, eher spröden Charakter besitzen.

Um Membranen mit einer geringen Protonenleckage herzustellen, hat sich Poly(epichlorhydrin) als aktives Polymer als am besten geeignet erwiesen. Als Inertpolymer kann hier PAN zu vorzugsweise 60 - 90 % zugemischt werden.

Die entstehenden Acidblocker-Anionenaustauschermembranen können überall da angewendet werden, wo Anionenaustauschermembranen benötigt werden, vorzugsweise in sauren Lösungen. Dies ist insbesondere z. B. bei der Elektro-Elektrodialyse, bei der Elektrodialyse mit bipolaren Membranen und beim EOP von Säuren der Fall. Durch die große Protonenleckage von Anionenaustauschermembranen nach dem Stand der Technik ist hier die Stromausbeute für die Produktion von Säure gering. Durch Verwendung von erfindungsgemäßen Acidblockern wird die Strom- und Energieausbeute derartiger Prozesse wesentlich erhöht.

Um Membranen mit einer Permeabilität für große Anionen herzustellen, haben sich als Reaktivpolymere Poly-(epichlorhydrin-co-ethylenoxid) oder Terpolymere des Epichlorhydrins als die am besten geeigneten Komponenten erwiesen. Als Inertpolymer ist auch hier PAN gut geeignet, wobei der Anteil dem betreffenden Anwendungsfall angepaßt werden kann. Typische Werte liegen bei 30 - 50 %.

Membranen dieses Typs sind permeabel für Anionen (z.B. Borsäure-Zucker-Ester; MW ca 400 g/mol), die durch keine erhältliche homogene Anionenaustauschermembran des Standes der Technik ohne Zerstörung oder Blockierung der Membran hindurchtreten können. Dadurch ergeben sich völlig neue Anwendungsmöglichkeiten in der Abtrennung bzw. Anreicherung großer organischer Säuren, z.B. Sulfonsäuren, saurer Farbstoffe, pharmazeutischer Produkte usw., mittels elektrodialytischer Verfahrenstechniken. Einer derartigen Anwendung kommt der rein aliphatische Charakter der Membranen zugute, da diese weniger als aromatische Membranen zur Aufnahme der entsprechenden organischen Species neigen.

Durch entsprechende Komposition können natürlich auch "normale" Anionenaustauschermembranen hergestellt werden, wobei der Flächenwiderstand der Membranen generell sehr niedrig liegt. Diese Membranen können z.B. bei der Elektrodialyse von Meerwasser oder der Säuredialyse Anwendung finden.

Die erfindungsgemäß hergestellten Membranen eignen sich auch hervorragend zur Fertigung von mehrschichtigen Membranen. Man kann z.B. auf eine Anionenaustauschermembran eine zweite Kationenaustauschermembran aufbringen. Vorteilhaft geschieht dies durch Ausstreichen einer Gießlösung einer Kationenaustauschermembran wie z.B. in DE-OS 3143804 Beispiel 2 beschrieben, und thermisches Entfernen des Lösemittels auf einer Anionenaustauschermembran.

Der Gegenstand der Erfindung sei ohne Beschränkung anhand der folgenden Beispiele veranschaulicht.

Beispiele

Zur Beurteilung der Membranen werden folgende Messungen durchgeführt: Die Permselektivitäten der Membranen werden aus den Konzentrationspotentialen zwischen 0.1 und 0.5 N Kaliumchloridlösung (Desalination. 79 (1990) 125-144) und die Membranwiderstände in 1 N KCl bzw. in Beispiel 9 in den angegebenen Lösungen (Kerres, J: Eigenberger. G: Preprint zum Aachener Membran Kolloquium 9.-11.3.93) bestimmt. Die Permselektivitäten P werden als Quotient zwischen gemessenem $\psi_{gem}$ und theoretischen $\psi_{theo}$ Diffusionspotential definiert.

$$P = \frac{\psi_{gem}}{\psi_{theo}}$$

Die lineare Ausdehnung wird bestimmt, indem zwei Punkte der Oberfläche vor und nach dem Quellen in 0,5 N NaCl-Lösung beobachtet werden. Die relative Zunahme des Abstandes zwischen den zwei Punkten in Prozent entspricht der linearen Ausdehnung. Die Dicke der Membran wird mittels einer Mikrometerschraube an der feuchten Membran bestimmt.

1. Es wird eine Lösung A hergestellt, indem man 20g Poly-(epichlorhydrin) in 80g DMF löst. Es wird eine Lösung B hergestellt, indem man 12g PAN in 88g DMF löst. Es wird eine Lösung C hergestellt, indem man 12,25g 1,4-Diazabicyclo-(2,2,2)-octan in 88g DMF löst.
Es werden 1 ml Lösung A, 1,1ml Lösung B und 1,2 ml Lösung C durch 30 minütiges Erwärmen auf ca. 80° C und Rühren mit einem Magnetrührer gemischt. Die klare Gießlösung wird auf einer Glasplatte zu einem Film von 1 - 2 mm Dicke ausgestrichen. Die Glasplatte wird in einem Reakionsgefäß, z.B. der Größe 21 x 22 x 4 cm, wie in Fig. 1 dargestellt, im Trockenschrank 2 h bei 110° C belassen und sodann wird durch 30 minütiges Erwärmen auf 130° C das Lösemittel entfernt. Nach dem Erkalten wird die Glasplatte mit dem darauf haftenden Film in 0,5 N NaCl gelegt. Nach einigen Minuten löst sich die Membran vom Glas. Die Membran weist eine Dicke von 0,12 mm, einen ohmschen Widerstand von 23,5 Ω * cm$^2$ und eine Permselektivität von 93,4% auf.

2. Es werden 2 ml Lösung A, 2,2 ml Lösung B und 0,8 g 1,4-Diazabicyclo-(2,2,2)-octan unter Erwärmen gemischt und diese Gießlösung, wie in Beispiel 1 beschrieben, zu einer Membran verarbeitet. Es entsteht eine Membran mit einer linearen Ausdehnung von mehr als 25%.

3. Es werden zu der in Beispiel 2 genannten Lösung noch 10 mg Polyethylenimin (Fluka) gegeben und die Mischung wird, wie in Beispiel 1 beschrieben, zu einer Membran verarbeitet. Es entsteht eine Membran mit einer linearen Ausdehnung von weniger als 5%. Sie besitzt eine Permselektvität von 93,0%.
Nachdem sie 42 h in 4 N HCl bei 80-90° C gelagert wurde, besitzt sie, nach Quellung in 1 N KCL eine Permselektivität von 92,0%

4. Es werden 10ml Lösung A, 39ml Lösung B und 20ml Lösung C gemischt und diese Gießlösung wird, wie in Beispiel 1 beschrieben, zu einer Membran verarbeitet.
Die Membran weist eine Dicke von 0.045 mm, einen ohmschen Widerstand von 7,5 Ω * cm$^2$ und eine Permselektivität von 89,6% auf. Die Membran wird in 1 N HCl gequollen und das entstehende Membranpotential zwischen 0,1 N HCl und 4 N HCl mittels zweier Ag/AgCl-Elektroden gemessen. Man mißt zwischen 0,1 N und 2 N Salzsäure ein Diffusionspotential von 62 mV.

5. Um die Leistungsfähigkeit der Membran zu überprüfen, wird ein EOP-Versuch durchgeführt. In einer drei Zellen umfassenden Elektrolyseapparatus gemäß Fig. 2 ist zwischen dem Anodenraum 3 und dem Kathodenraum 1 eine weitere Kammer 2 vorhanden. Diese ist von dem Kathodenraum durch die zu prüfende Anionenaustauschermembran (A) und vom Anodenraum durch eine Kationenaustauschermembran (K) (Selemnion CMV) getrennt.
Durch den Kathodenraum werden 1000 ml 1 N Salzsäure und durch den Anodenraum 1000 ml 1 N Schwefelsäure umgepumpt

Bei Stromfluß gelangen Protonen aus der Schwefelsäure des Anodenraums und gleichzeitig Chloridionen aus der Salzsäure des Kathodenraums in die mittlere Kammer 2.
Hier reichert sich also Salzsäure an. Da das Volumen dieser entstehenden Säure zunimmt, tropft diese aus der Kammer und kann durch eine geeignete Vorrichtung aufgefangen werden. Die in dieser Kammer befindliche Lösung wird weder umgepumpt, noch gerührt. Um das Volumen der mittleren Kammer anfangs auszufüllen, wird 1 N Salzsäure vorgelegt, und so lange Strom durch die Apparatur geleitet, bis die Konzentration der überlaufenden Säure konstant ist.
Es wird eine Membran nach Beispiel 4 verwendet, die durch ein Polyamidgewebe mit einer freien Fläche von 51 % verstärkt ist und eine Dicke von 0,09 mm aufweist.
Man erhält bei einer Stromdichte von 100 mA/cm$^2$ und einer Temperatur von 30° C so eine 3,92 N Salzsäure bei einem Fluß von 0,36 g/h*cm$^2$. Das entspricht einer Stromausbeute von 38,4 %.

6. Es wird ein EOP-Versuch gemäß Beispiel 5 durchgeführt mit dem Unterschied, daß eine Acidblockermembran des Typs ACM der Firma Tokuyama Soda anstelle der Membran nach Beispiel 4 verwendet wird.
Man erhält bei einer Stromdichte von 100 mA/cm$^2$ und einer Temperatur von 30° C so eine 3,90 N Salzsäure bei einem Fluß von 0.31 g/h*cm$^2$. Das entspricht einer Stromausbeute von 33,1%.

7. Es werden 2 g Poly-(epichlorhydrinj in 18 g N-Methylpyrrolidon gelöst und 2g 1,4-Diazabicyclo-(2,2,2)-octan unter Erwärmen auf 90° C hinzugegeben. In dieser Mischung werden 0.54 g Polysulfon bei 70° C gelöst und diese Gießlösung wird, wie in Beispiel 1 beschrieben, zu einer Membran verarbeiter.
Die Membran weist eine Dicke von 0,085 mm. einen ohmschen Widerstand von 5 $\Omega$ * cm$^2$ und eine Permselektivität von 94,6% auf.

8. Beispiel 7 wird wiederholt mit der Änderung, daß das Polysulfon durch Polyethersulfon ersetzt wird.
Es entsteht eine Membran mit einem Widerstand von 9 $\Omega$ * cm$^2$, einer Permselektivität von 92,8%, und einer Dicke von 0,075 mm. Nach 48stündiger Lagerung in 10% NaOH bei 80-90° C hat sie eine Permselektivität von 90,5%.

9. Es wird eine Lösung angesetzt, indem man 10 g Poly-(epichlorhydrin-co-ethylenoxid) in 90 g DMF löst. Zu dieser wird 12,3 g 1,4-Diazabicyclo-(2,2,2)-octan gegeben und unter Rühren auf 70° C erwärmt, bis die Lösung merklich viskoser wird (ca 10 Stunden). Diese wird mit einer 12%igen PAN-Lösung in DMF zu den in Tabelle 2 angegebenen Gewichtsanteilen Inertpolymer - ursprüngliches Reaktivpolymer gemischt. Diese Gießlösung wird, wie in Beispiel 1 beschrieben, zu Membranen verarbeitet. Sie werden jedoch durch Einlegen eines Polyamidgewebes mit einer freien Fläche von 51% verstärkt.
Es ergeben sich Membranen, die durch ihre Widerstände in gesättigten wässrigen Lösungen der in der Tabelle angegebenen Substanzen charakterisiert werden. Zum Vergleich ist eine handelsübliche Anionenaustauschermembran des Typs Asahi AMV ebenfalls charakterisiert worden.

Tabelle 2

| Inertanteil | Potential 0,1/0,5 N KCl | Widerstand in geättigter Lösung von | |
|---|---|---|---|
| | | Natriumlaurylsulfat | Anthrachinonsulfonsäure- Natriumsalz |
| Masse% | mV | $\Omega$*cm$^2$ | $\Omega$*cm$^2$ |
| 50 | 33,7 | 3600 | 8140 |
| 45 | 31,5 | 470 | 435 |
| 40 | 29.8 | 98 | 135 |
| Asahi AMV | | 14000 | 40000 |

10. Eine Lösung aus 2g Poly-(epichlorhydrin) und 1.23g 1,4-Diazabicyclo-(2,2,2)-octan und 1.95 g 20% Salzsäure in 25 ml DMF wird 16h im Ölbad bei 120° C gehalten. Die Lösung wird nach Verdünnen mit Wasser über einen schwach basischen Ionenaustauscher geleitet, um das Ammoniumsalz des tertiären Amins in das freie Amin zu überführen. Die entstehende Lösung wird im Vakuum bei 60° C Ölbadtemperatur eingeengt und in 30 ml DMF aufgenommen. Diese wird mit Lösung A zu einem PAN-Gehalt von 50 Masse% gemischt und, wie in Beispiel 1 beschrieben, zu einer Membran verarbeitet. Die Membran besitzt eine Permselektivität von 87,3%, einen ohmschen Widerstand von 3,1 $\Omega * cm^2$ und eine Dicke von 0,06 mm.

11. Es wird wie in Beispiel 3 verfahren. Der nach der Behandlung im Ofen entstehende Film wird jedoch nicht gewässert, sondern auf diesen wird eine ca. 35%ige Lösung eines sulfonierten Polysulfons (wie z.B. in der DE-OS 3143804 im Beispiel 2 dargestellt) zu einem 0,1 mm dicken Film aufgetragen. Durch Erwärmen im Trockenschrank auf 125° C wird das Lösemittel entfernt. Es entsteht eine zweischichtige Membran, die bipolaren Charakter hat.

**Patentansprüche**

1. Anionenaustauschermembranen aus einer Lösung von

   - Polymeren, die reaktive halogenhaltige funktionelle Gruppen enthält
   - tertiären Aminen und
   - Inertpolymer

   durch thermische Quaternisierung des Amins durch das reaktive halogenhaltige Polymer bei 30 - 200° C und gleichzeitigem Verdampfen des Lösemittels nach Bildung eines Films, dadurch gekennzeichnet, daß das Polymer, das reaktive halogenhaltige funktionelle Gruppen enthält, ein Epichlorhydrin-Polymer, insbesondere Polyepichlorhydrin, Epichlorhydrinkautschuk, Epichlorhydrin-Ethylenoxidcopolymer oder Epichlorhydrinterpolymer ist.

2. Anionenaustauschermembran gemäß Anspruch 1, dadurch gekennzeichnet, daß das tertiäre Amin zwei oder mehr tertiäre Aminogruppen pro Molekül enthält.

3. Anionenaustauschermembran gemäß Anspruch 2, dadurch gekennzeichnet, daß es sich bei dem tertiären Amin um 1,4-Diazabicyclo-(2,2,2)-octan handelt.

4. Anionenaustauschermembran gemäß Anspruch 1, dadurch gekennzeichnet, daß es sich bei den Inertpolymeren um Polysulfon, Polyethersulfon, Polymethacrylnitril, Polyacrylnitril oder Copolymerer der entsprechenden Monomere handelt.

5. Anionenaustauschermembran gemäß Anspruch 1, dadurch gekennzeichnet, daß die Anionenaustauschermembran in 2 n Salzsäure eine Permselektivität für Chlorid von mindestens 75% aufweist.

6. Verfahren zur Herstellung von Ionenaustauschermembranen nach Anspruch 1 durch Ausstreichen der Polymerlösung zu einem Film, dadurch gekennzeichnet, daß der Film in einem Reaktionsgefäß mit einem Dampfvolumen von weniger als 3000 ml pro 100 $cm^2$ Membranfläche durch Erhitzen auf 100 - 130° C hergestellt wird.

7. Verfahren zur Herstellung von Ionenaustauschermembranen nach Anspruch 1, dadurch gekennzeichnet, daß die Gießlösung hergestellt wird, indem man

   a) ein Polymer gemäß dem Merkmal des Anspruchs 1 mit tertiären Aminen, in denen pro Molekül jede über 1 hinausgehende tertiäre Aminogruppe durch Hydrochloridbildung, Acetylierung o.ä. geschützt ist, umsetzt,

   b) die Schutzgruppe durch Deacetylierung oder Ionenaustausch entfernt, so daß ein quaternäres Polyetherammoniumsalz, dessen reaktives Halogen teilweise durch quatäre Ammoniumgruppen und Aminogruppen, vorzugsweise tertiäre Aminogruppen, ersetzt ist entsteht,

   c) das Polymer in ein geeignetes Lösemittel überführt, z.B. durch Einengen des Ionenaustauscherpermeats und Lösen des Rückstands im gewünschten Lösemittel und

d) die Polymerlösung mit Inertpolymer zur fertigen Gießlösung mischt.

8. Verfahren nach Anspruch 7, dadurch gekennzeichnet, daß das quaternäre Polyetherammoniumsalz noch 0,5-95 mol% ursprünglich vorhandenes aktives, nucleophil substituierbares organisches Halogen enthält.

9. Verfahren nach Anspruch 7, dadurch gekennzeichnet, daß das Polyetherammoniumsalz aus Anspruch 7b mit ursprünglich eingesetztem Polymer gemäß dem Merkmal des Anspruch 1 gemischt wird, so daß das Gemisch 0,5-95 mol% insgesamt ursprünglich vorhandenes aktives, nucleophil substituierbares organisches Halogen enthält.

10. Bipolare Membran, dadurch gekennzeichnet, daß die anionenaustauschende Schicht dieser Membran gemäß Anspruch 1 ausgeführt ist.

**Claims**

1. Anion-exchange membranes produced from a solution of

   - polymers containing reactive halogen-containing functional groups,

   - tertiary amines, and

   - inert polymer,

   by thermal quaternization of the amine by the reactive halogen-containing polymer at 30 to 200°C and simultaneous evaporation of the solvent after the formation of a film, **characterized in that** the polymer which contains reactive halogen-containing functional groups is an epichlorohydrin-polymer, in particular polyepichlorohydrin, epichlorohydrin rubber, epichlorohydrin-ethylene oxide copolymer or a terpolymer of epichlorohydrin.

2. An anion-exchange membrane according to Claim 1, **characterized in that** the tertiary amine comprises two or more tertiary amino groups *per* molecule.

3. An anion-exchange membrane according to Claim 2, **characterized in that** the tertiary amine is 1,4-diazabicyclo-(2,2,2)-octane.

4. An anion-exchange membrane according to Claim 1, **characterized in that** the inert polymers are polysulphone, polyethersulphone, polymethacrylonitrile, polyacrylonitrile or copolymers of the corresponding monomer units.

5. An anion-exchange membrane according to Claim 1, **characterized in that** the anion-exchange membrane has a permselectivity for chloride of at least 75% in 2 N hydrochloric acid.

6. A process for producing anion-exchange membranes according to Claim 1 by spreading the polymer solution to form a film, **characterized in that** the film is produced in a reaction vessel with a steam volume of less than 3000 ml *per* 100 cm$^2$ of membrane area by heating up to 100 to 130°C.

7. A process for producing anion-exchange membranes according to Claim 1, **characterized in that** the casting solution is prepared by

   a) reacting a polymer according to the feature of Claim 1 with tertiary amines in which *per* molecule each tertiary amino group exceeding 1 is protected by the formation of hydrochlorides, acetylation or the like,

   b) removing the protective group by deacetylation or ion exchange so as to produce a quaternary polyether ammonium salt, the reactive halogen of which is partially substituted by quaternary ammonium groups and amino groups, preferably tertiary amino groups,

   c) converting the polymer into an appropriate solvent, *e.g.* by concentrating the ionexchange permeate and dissolving the residue in the desired solvent, and

d) mixing the polymer solution with inert polymer to form the finished casting solution.

8. A process according to Claim 7, **characterized in that** the quaternary polyether ammonium salt still includes 0·5 to 95 mol% of the active, nucleophilically substitutable organic halogen originally present.

9. A process according to Claim 7, **characterized in that** the polyether ammonium salt according to Claim 7b is mixed with the polymer originally used according to the feature of Claim 1 so that the mixture contains 0·5 to 95 mol% as a whole of the active, nucleophilically substitutable organic halogen originally present.

10. A bipolar membrane, **characterized in that** the anion-exchanging layer of the said membrane is produced according to Claim 1.

## Revendications

1. Membranes échangeuses d'anions constituées d'une solution :

   - de polymères qui contiennent des groupes fonctionnels halogénés réactifs,
   - d'amines tertiaires et
   - d'un polymère inerte,

   par quaternisation thermique de l'amine par le polymère halogéné réactif à une température de 30 à 200°C et vaporisation simultanée du solvant après formation d'un film, caractérisées en ce que le polymère, qui contient des groupes fonctionnels halogénés réactifs, est un polymère d'épichlorhydrine, en particulier de polyépichlorhydrine, de caoutchouc d'épichlorhydrine, de copolymère d'épichlorhydrine et d'oxyde d'éthylène ou d'interpolymère d'épichlorhydrine.

2. Membrane échangeuse d'anions selon la revendication 1, caractérisée en ce que l'amine tertiaire contient deux groupes amino tertiaires ou davantage par molécule.

3. Membrane échangeuse d'anions selon la revendication 2, caractérisée en ce que l'amine tertiaire est le 1,4-diazabicyclo-(2,2,2)-octane.

4. Membrane échangeuse d'anions selon la revendication 1, caractérisée en ce que le polymère inerte est une polysulfone, une polyéthersulfone, un polyméthacrylonitrile, un polyacrylonitrile ou des copolymères des monomères correspondants.

5. Membrane échangeuse d'anions selon la revendication 1, caractérisée en ce que la membrane échangeuse d'anions présente, dans de l'acide chlorhydrique 2N, une sélectivité de perméation pour le chlorure d'au moins 75 %.

6. Procédé de fabrication de membranes échangeuses d'ions selon la revendication 1, par formation d'un film avec la solution polymère, caractérisé en ce que le film est réalisé dans un récipient réactionnel ayant un volume de vaporisation de moins de 3000 ml par 100 cm$^3$ de surface de membrane par chauffage à une température de 100 à 130°C.

7. Procédé de fabrication de membranes échangeuses d'ions selon la revendication 1, caractérisé en ce que la solution de coulée est préparée de la manière suivante :

   a) on fait réagir un polymère selon la caractéristique de la revendication 1 avec des amines tertiaires, dans lesquelles chaque groupe amino tertiaire de chaque molécule au-dessus de 1 est protégé par formation de chlorhydrate, acétylation, entre autres,
   b) on élimine le groupe de protection par désacétylation ou échange ionique, de telle sorte que soit formé un sel de polyétherammonium quaternaire, dont l'halogène réactif est remplacé par des groupes d'ammonium et des groupes amino quaternaires, de préférence des groupes amino tertiaires,
   c) on réduit le polymère dans un solvant approprié, par exemple par concentration du perméat d'échange ionique et dissolution du résidu dans le solvant souhaité, et
   d) on mélange la solution polymère au polymère inerte pour obtenir la solution de coulée prête.

**8.** Procédé selon la revendication 7, caractérisé en ce que le sel de polyétherammonium quaternaire contient encore 0,5 à 95 moles pour-cent de l'halogène organique actif substituable sur le noyau initialement présent.

**9.** Procédé selon la revendication 7, caractérisé en ce que le sel de polyétherammonium de la partie b de la revendication 7 est mélangé au pclymère initialement utilisé selon la caractéristique de la revendication 1, de telle sorte que le mélange contienne au total 0,5 à 95 moles pour-cent de l'halohène organique actif substituable sur le noyau initialement présent.

**10.** Membrane bipolaire, caractérisée en ce que la couche échangeuse d'anions de cette membrane est réalisée selon la revendication 1.

## Fig. 1

## Fig. 2